# EUROPEAN PATENT SPECIFICATION

(11) **EP 3 374 203 B1**
(45) Date of publication and mention of the grant of the patent: **28.08.2019**
(21) Application number: 16793922.2
(22) Date of filing: 10.11.2016
(51) Int. Cl.: B60C 23/00, B60C 5/02

(54) **A CONTROL CIRCUIT FOR CONTROLLING THE PRESSURE OF A TIRE WHEEL**
REGELKREIS ZUR REGELUNG DES DRUCKS EINES REIFENRADS
CIRCUIT DE COMMANDE PERMETTANT DE RÉGULER LA PRESSION D'UNE ROUE À PNEU

(30) Priority: 13.11.2015 IT UB20155570
(43) Date of publication of application: 19.09.2018
(73) Proprietor: CNH Industrial Italia S.P.A., 10135 Turin (IT)
(72) Inventor: BENEVELLI, Alessandro, 42020 Albinea Reggio nell"Emilia (IT); MORSELLI, Riccardo, 41057 San Vito di Spilamberto (Modena) (IT)
(74) Representative: CNH Industrial IP Department
(86) International application number: PCT/EP2016/077321
(87) International publication number: WO 2017/081188

(56) References cited:
- US-A- 3 542 110
- US-A1- 2013 153 082

## Description

The invention relates to a control circuit for controlling the pressure of a tire wheel.

The invention is particularly useful in operating machines and tractors which may perform field operations and road operations.

During field operations a lower tire pressure is preferred, while during road operations and travelling a higher tire pressure is preferred to improve comfort for the driver and to reduce the fuel consumption.

In order to reduce the inflation/deflation times, some wheels are available which comprise an inner tube, enclosing a dummy volume, attached to the rim inside the tire. The inner tube is normally inflated and kept at a high pressure. The volume inside the tire and external to the inner tube is instead inflated/deflated in order to increase/decrease the tire pressure. In this way only a limited volume, much smaller than the overall volume enclosed by the tire, has to be inflated/deflated, so that the time required for both operations is sensibly reduced.

The available wheels are controlled by means of several circuits comprising at least a line for inflating/deflating the inner tube and at least a separate line for inflating/deflating the tire volume. Such circuits are very complex and difficult to manage, and furthermore require the adoption of complex rotating joints which must consent the air feeding of both lines. Another drawback of available wheels and control circuits is that they are extremely difficult to be adopted on existing machines which were not specifically designed.

US2013153082 discloses a variable friction tire including a tire wall portion, a tread portion, a primary inflatable tube, and a secondary inflatable tube, however it does not provide a system of valves for managing tyre pressure

The aim of the present invention is to provide a control circuit which consent the management of the tire pressure of a wheel in a simple and effective manner.

An advantage of the circuit according to the invention is that it requires a single feeding line.

Another advantage of the circuit according to the invention is that it does not require any kind of electrical/electronic control.

A further advantage of the circuit according to the invention is that it can be adopted almost on every existing machine.

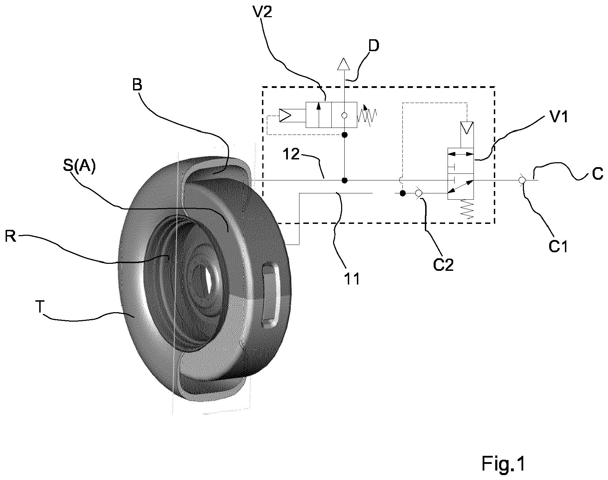

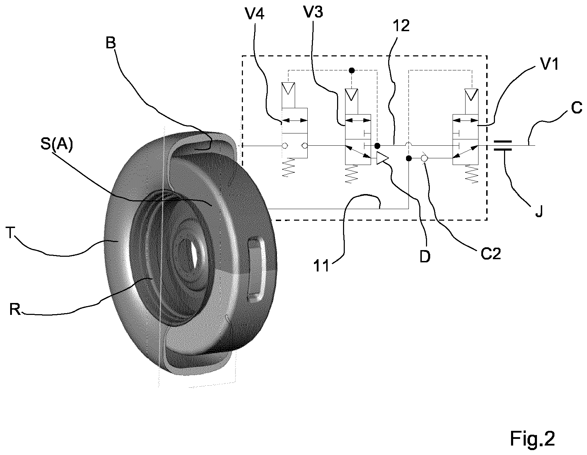

Further features and advantages of the invention will better emerge from the following description and figures of two preferred but not exclusive embodiments of the invention, wherein:
□ figure 1 discloses a first embodiment of the circuit according to the invention;
□ figure 2 discloses a second embodiment of the circuit not according to, but useful for understanding the invention.

With reference to figure 1, the control circuit is connected to a tire wheel comprising a rim (R). An inner tube (S), which encloses a first volume (A), is fixable to the rim (R), permanently or by means of a shape joint which arise on inflation of the inner tube (S). A tire (T) is fixed to the rim (R) as well, which encloses the inner tube (A) and a second volume (B) external to the inner tube (A).

Advantageously the inner tube (S) is made of fabric, for example the fabric used for air-bags. In this way the inner tube is flexible but substantially inextensible, and it can be designed in order to assume a desired shape when inflated at the maximum pressure. Preferably the inner tube is designed so as not to completely fill the tire (T) volume, in order to leave the thread of the tire (T) free to deform under working conditions.

It is possible to provide a rigid structure which covers the inner tube (S), in order to make the inner tube (S) substantially inextensible.

The control circuit comprises a controlled pressure line (C), connectable to a compressor or in general to a source of compressed air, for example the compressor normally on board to the operating machines.

A first line (11) is connectable to the controlled pressure line (C) and is connected to the first volume (A) for introducing air inside the first volume (A).

A second line (12) is connectable to the controlled pressure line (C) and is connected to the second volume (B) for introducing air inside the second volume (B).

The control circuit further comprises a first spool valve (V1), which is a three way-two positions valve, having a first position in which the controlled pressure line (C) is connected to the first line (11), and a second position, in which the controlled pressure line (C) is connected to the second line (12).

The first spool valve (V1) is normally kept in the first position.

The first spool valve (V1) is switchable in the second position if the pressure in the first volume (A) overcomes a predetermined pressure.

The adoption of the first spool valve (V1) allows the separate inflating of the first volume (A) and of the second volume (B) by way of a single controlled pressure line (C). This single controlled pressure line (C) could by the inflating valve of the common wheels, i.e. the wheels which are inflated by means of devices not part of the machine or tractor, or a line connected to the tire pressure control system, if the machine or tractor is so provided.

The embodiment of figure 1 works as follows.

The first spool valve (V1) is normally open, i.e. is kept in the first position by means, for example, of a spring. In this condition, the supply of air to the controlled pressure line (C) inflates the first volume (A) through the first line (11). When the pressure inside the first volume (A) reaches a predetermined value, sufficient to overcome the force which keeps the spool in the first position, the first spool valve (V1) switches in the second position and the controlled pressure line (C) is placed in communication with the second line (12), so that the second volume (B) is inflated. Preferably the first spool valve (V1) is piloted in the second position by the pressure inside the first line (11).

Advantageously an outlet spool valve (V2) is connected to the second line (12) and to an outlet line (D). The outlet spool valve (V2) is a two way-two position valve and has a first position, in which it closes a connection between the second line (12) and the outlet line (D), and a second position, in which it opens a connection between the second line (12) and the outlet line (D). Said outlet spool valve (V2) is normally kept in the first position, for example by means of a spring. The outlet spool valve (V2) is switchable in the second position if the pressure in the second volume (B) overcomes a predetermined pressure.

The function of the outlet spool valve (V2) is the following.

When the pressure inside the second volume (B) reaches a predetermined value, sufficient to overcome the force which keeps the spool in the first position, the outlet spool valve (V2) switches in the second position. In these condition the second line (12) is placed in communication with the outlet line (D) and the inflating of the second volume (B) ceases. Preferably the outlet spool valve is piloted in the second position by the pressure in the second line (12).

Preferably the outlet spool valve (V2) is provided with adjusting means which allow to regulate the pressure requested to switch the spool from the first to the second position. Preferably said adjusting means comprise a screw acting on a spring which pushes the spool towards the first position. In this way, in order to deflate the second volume (B) it is sufficient to act on the adjusting means and reduce the pressure requested to switch the spool from the first to the second position.

The control circuit may be provided with at least a first check valve (C1), placed along the controlled pressure line (C) for preventing backflow from the first spool valve (V1), and/or a second check valve (C2), placed along the first line (11) for preventing backflow from the first volume (A).

In the second embodiment, shown in figure 2, which is not according to the invention, but useful for understanding, the control circuit comprises a second spool valve (V3), placed along the second line (12) between the first spool valve (V1) and the second volume (B), and a third spool valve (V4), placed along the second line (12) between the second spool valve (V3) and the second volume (B).

The second spool valve (V3) is a three way-two positions valve having a first position, in which connects the second volume (B) to an outlet line (D), and a second position, in which connects the second line (12) to the second volume (B).

The third spool valve (V4) is a two way-two positions valve having a first position, in which it closes the second line (12), and a second position, in which it opens the second line (12).

Both the second and third spool valve are normally kept in their first position.

The third spool valve (V4) is switchable in the second position in the pressure inside the second line (12) overcomes e first predetermined pressure.

The second spool valve (V3) is switchable in the second position if the pressure inside the second line (12) overcomes a second predetermined pressure higher than said first predetermined pressure.

The control circuit of the second embodiment, which is not covered by the invention, works as follows.

With all the spool valves (V1,V3,V4) in their first position, feeding air to the controlled pressure line (C) inflates the inner tube (S) through the first line (11). When the pressure inside the inner tube (S) reaches a predetermined value, i.e. the desired inflate pressure, the first spool valve (V1) switches in the second position, placing in communication the controlled pressure line (C) with the second line (12). Also in this case the first spool valve (V1) is piloted in the second position by the pressure inside the first line (11). Preferably both the second and third spool valve are piloted in their second position by the pressure inside the second line (12) between the first spool valve (V1) and the second spool valve (V1).

With the second spool valve (V3) in the second position, the pressure inside the second line (12) increases. When this pressure overcome the first predetermined pressure value, the third spool valve (V4) switches in the second position. The pressure inside the second line (12) continues to increase and, when the second predetermined pressure is reached, also the second spool valve (V3) switches in the second positions. With both the second and third spool valve (V3,V4) in their second position, the second volume (B) is fed with air through the second line and the tire (T) inflates.

When the pressure inside the tire (T) reaches a desired value, measured by means of a pressure sensor not depicted in figure 2, the air feeding is stopped and the second and third spool valves (V3,V4) switch in their first position, closing the second volume (B). The first spool valve (V1) is kept in the second position by the pressure inside the inner tube (S), but the inner tube (S) cannot deflate anyway owing to the presence of a check valve (C2) on the first line (11). How is it possible to deflate the inner tube?

In the above conditions, with the first spool valve in second position and the second and third spool valve (V3,V4) in first position, if air is fed to the controlled pressure line (C) at a pressure higher than the first predetermined pressure but lower than the second predetermined pressure, the third spool valve (V4) switches in the second position, while the second spool valve (V3) remains in the first positions. In these conditions the second volume (B) is placed in communication with the outlet line (D) and the tire deflates. Therefore, in the second embodiment of the invention not only the inflate is possible through a single controlled pressure line (C), but also the deflate of the tire (T) is possible through the same controlled pressure line (C) by means a suitable pressure.

The control circuit of the second embodiment is particularly advantageous in combination with a tire pressure monitoring system which is available in some operating machines. As known in the technical filed, such monitoring system comprises a pressure sensor for each wheel of the operating machine, fitted to detect the pressure inside the respective tire, and a rotating sealing joint for each wheel. Each rotating sealing joint is normally provided in the hub of a wheel and it is design to allow the wheel to rotate an to place in communication the inner volume of the tire with an air feeding line, on its turn connected to a compressor on board to the operating machine. A control unit commands the inflate or deflate of each single tire on the basis of the operating conditions and of the signal of each pressure sensor.

The control circuit of the second embodiment can be attached to the rim (R) and interposed between the rotating joint and the first and second volume (A,B). The rotating joint can therefore be designed to provide a single controlled pressure line. Furthermore, as already explained, no additional electric/electronic components have to be installed for actuating the control circuit.

## Claims

1. A control circuit for controlling the pressure of a tire wheel, wherein the tire wheel comprises:
a rim (R);
an inner tube (S), which encloses a first volume (A);
a tire (T), fixed to the rim (R), which encloses the inner tube (S) and a second volume (B) external to the inner tube (S);
the control circuit comprising:
a controlled pressure line (C), connectable to a compressor;
a first line (11), connectable to the controlled pressure line (C) and connected to the first volume (A) for introducing air inside the first volume (A);
a second line (12), connectable to the controlled pressure line (C) and connected to the second volume (B) for introducing air inside the second volume (B);
**characterised in that**:
said control circuit comprises a first spool valve (V1), which is a three way-two positions valve, having a first position in which the controlled pressure line (C) is connected to the first line (11), and a second position, in which the controlled pressure line (C) is connected to the second line (12);
the first spool valve (V1) is normally kept in the first position;
the first spool valve (V1) is switchable in the second position if the pressure in the first volume (A) overcomes a predetermined pressure;
said control circuit further comprises an outlet spool valve (V2), connected to the second line (12) and to an outlet line (D), which is a two way-two position valve and has a first position in which it closes a connection between the second line (12) and the outlet line (D), and a second position in which it opens a connection between the second line (12) and the outlet line (D), said outlet spool valve (V2) being normally kept in the first position, said outlet spool valve (V2) being switchable in the second position if the pressure in the second volume (B) overcomes a predetermined pressure.

2. The control circuit according to claim 1, wherein the first spool valve (V1) is piloted in the second position by the pressure inside the first line (11).

3. The control circuit according to claim 1, wherein the outlet spool valve is piloted in the second position by the pressure in the second line (12).

4. The control circuit according to claim 1, comprising at least a first check valve (C1), placed along the controlled pressure line (C) for preventing backflow from the first spool valve (V1), and/or a second check valve (C2), placed along the first line (11) for preventing backflow from the first volume (A).

5. A wheel, comprising:
a rim (R);
an inner tube (S), which encloses a first volume (A);
a tire (T), fixed to the rim (R), which encloses the inner tube (S) and a second volume (B) external to the inner tube (S);
an inflate valve for introducing air into the first volume (A) and the second volume (B);
**characterised in that** said wheel further comprises a control circuit according to one of claims 1 to 4 connected to the rim (R) and interposed between said inflate valve and said first volume (A) and second volume (B).

## Patentansprüche

1. Regelkreis zur Regelung des Drucks eines bereiften Rads, wobei das bereifte Rad umfasst:
eine Felge (R);
einen inneren Schlauch (S), der ein erstes Volumen (A) umgibt;
einen Reifen (T), der an der Felge (R) befestigt ist und der den inneren Schlauch (S) und ein zweites Volumen (B) außerhalb des inneren Schlauchs (S) umgibt;
wobei der Regelkreis umfasst:
eine geregelte Druckleitung (C), die mit einem Kompressor verbindbar ist;
eine erste Leitung (11), die mit der geregelten Druckleitung (C) verbindbar ist und die mit dem ersten Volumen (A) zum Einleiten von Luft in das erste Volumen (A) verbunden ist;
eine zweite Leitung (12), die mit der geregelten Druckleitung (C) verbindbar ist und die mit dem zweiten Volumen (B) zum Einleiten von Luft in das zweite Volumen (B) verbunden ist;
**dadurch gekennzeichnet, dass**:
der Regelkreis ein erstes Schieberventil (V1) umfasst, das ein Drei-Wege-Zwei-Stellungen-Ventil ist, das eine erste Stellung aufweist, in der die geregelte Druckleitung (C) mit der ersten Leitung (11) verbunden ist, und eine zweite Stellung aufweist, in der die geregelte Druckleitung (C) mit der zweiten Leitung (12) verbunden ist;
wobei das erste Schieberventil (V1) normalerweise in der ersten Stellung gehalten wird;
wobei das erste Schieberventil (V1) in die zweite Stellung verstellbar ist, wenn der Druck im ersten Volumen (A) einen vorbestimmten Druck überschreitet;
wobei der Regelkreis weiterhin ein Auslass-Schieberventil (V2) umfasst, das mit der zweiten Leitung (12) und einer Auslassleitung (D) verbunden ist, das ein Zwei-Stellungen-Ventil ist und das eine erste Stellung aufweist, in der es eine Verbindung zwischen der zweiten Leitung (12) und der Auslassleitung (D) schließt, und das eine zweite Stellung aufweist, in der es eine Verbindung zwischen der zweiten Leitung (12) und der Auslassleitung (D) öffnet, wobei das Auslass-Schieberventil (V2) normalerweise in der ersten Stellung gehalten wird, wobei das Auslass-Schieberventil (V2) in die zweite Stellung verstellbar ist, wenn der Druck im zweiten Volumen (B) einen vorbestimmten Druck überschreitet.

2. Regelkreis nach Anspruch 1, wobei das erste Schieberventil (V1) durch den Druck in der ersten Leitung (11) in die zweite Stellung gesteuert wird.

3. Regelkreis nach Anspruch 1, wobei das Auslass-Schieberventil durch den Druck in der zweiten Leitung (12) in die zweite Stellung gesteuert wird.

4. Regelkreis nach Anspruch 1, der zumindest ein erstes Sperrventil (C1) umfasst, das entlang der geregelten Druckleitung (C) angeordnet ist, um eine Rückströmung vom ersten Schieberventil (V1) zu verhindern, und/oder ein zweites Sperrventil (C2) umfasst, das entlang der ersten Leitung (11) angeordnet ist, um eine Rückströmung aus dem ersten Volumen (A) zu verhindern.

5. Rad mit:
einer Felge (R);
einem inneren Schlauch (S), der ein erstes Volumen (A) umgibt;
einem Reifen (T), der an der Felge (R) befestigt ist und der den inneren Schlauch (S) und ein zweites Volumen (B) außerhalb des inneren Schlauchs (S) umgibt;
ein Aufpumpventil zum Einleiten von Luft in das erste Volumen (A) und das zweite Volumen (B);
**dadurch gekennzeichnet, dass** das Rad weiterhin einen Regelkreis nach einem der Ansprüche 1 bis 4 umfasst, der mit der Felge (R) verbunden ist und zwischen dem Aufpumpventil und dem ersten Volumen (A) und dem zweiten Volumen (B) angeordnet ist.

## Revendications

1. Circuit de commande permettant de commander la pression d'une roue à pneu, dans lequel la roue à pneu comprend :
une jante (R),
une chambre à air intérieure (S), qui renferme un premier volume (A),
un pneu (T), fixé à la jante (R), qui renferme la chambre à air intérieure (S) et un second volume (B) externe à la chambre à air intérieure (S),
le circuit de commande comprenant :
une conduite à pression commandée (C), pouvant être reliée à un compresseur,
une première conduite (11) pouvant être reliée à la conduite à pression commandée (C) et reliée au premier volume (A) permettant d'introduire de l'air à l'intérieur du premier volume (A),
une seconde conduite (12) pouvant être reliée à la conduite à pression commandée (C) et reliée au second volume (B) permettant d'introduire de l'air à l'intérieur du second volume (B),
**caractérisé en ce que** :
ledit circuit de commande comprend un premier distributeur (V1), qui est un distributeur à trois voies et à deux positions, ayant une première position dans laquelle la conduite à pression commandée (C) est raccordée à la première conduite (11) et une seconde position dans laquelle la conduite à pression commandée (C) est raccordée à la seconde conduite (12) ;
le premier distributeur (V1) est maintenu normalement dans la première position ;
le premier distributeur (V1) peut être commuté dans la seconde position si la pression dans le premier volume (A) dépasse une pression prédéterminée ;
ledit circuit de commande comprend en outre un distributeur de sortie (V2) relié à la seconde conduite (12) et à une conduite de sortie (D), qui est un distributeur à deux voies et à deux positions qui a une première position dans laquelle il ferme un raccordement entre la seconde conduite (12) et la conduite de sortie (D) et une seconde position dans laquelle il ouvre un raccordement entre la seconde conduite (12) et la conduite de sortie (D), ledit distributeur de sortie (V2) étant normalement maintenu dans la première position, et ledit distributeur de sortie (V2) pouvant être commuté dans la seconde position si la pression dans le second volume (B) dépasse une pression prédéterminée.

2. Circuit de commande selon la revendication 1, dans lequel le premier distributeur (V1) est piloté dans la seconde position par la pression à l'intérieur de la première conduite (11).

3. Circuit de commande selon la revendication 1, dans lequel le distributeur de sortie est piloté dans la seconde position par la pression à l'intérieur de la seconde conduite (12).

4. Circuit de commande selon la revendication 1, comprenant au moins un premier clapet de non-retour (C1) placé le long de la conduite à pression commandée (C) pour empêcher un écoulement de retour depuis le premier distributeur (V1), et/ou un second clapet de non-retour(C2) placé le long de la première conduite (11) pour empêcher un écoulement de retour depuis le premier volume (A).

5. Roue, comprenant :
une jante (R) ; une chambre à air intérieure (S), qui renferme un premier volume (A) ;
un pneu (T), fixé à la jante (R), qui renferme la chambre à air intérieure (S) et un second volume (B) extérieur à la chambre à air intérieure (S) ;
une valve de gonflage pour introduire de l'air dans le premier volume (A) et le second volume (B) ;
**caractérisé en ce que** ladite roue comprend en outre un circuit de commande selon l'une quelconque des revendications 1 à 4 connecté à la jante (R) et interposé entre ladite valve de gonflage et lesdits premier volume (A) et second volume (B).
